# DEMANDE DE BREVET EUROPEEN

(11) **EP 1 026 563 A1**
(43) Date de publication de la demande: **09.08.2000**
(21) Numéro de dépôt: 00102340.7
(22) Date de dépôt: 03.02.2000
(51) Int. Cl.: G05B 19/408

(54) **Système de gestion informatisé pour un parc de machines-outils à commande numérique**

(30) Priorité: 03.02.1999 LU 90344
(71) Demandeur: S.G.F.P. S.A., 1150 Luxembourg (LU)
(72) Inventeur: Gauthier, Guy, 1180 Bruxelles (BE); Refogos, Georges, 6001 Marcinelle (BE)
(74) Mandataire: Schmitt, Armand

(57) **Abrégé**

On présente un système de gestion informatisé pour un parc de machines-outils à commande numérique comprenant au moins une machine-outil à commande numérique de première génération. Cette Machine-outil à commande numérique (16) dispose d'un directeur de commande numérique (22) et d'un lecteur de supports de données (24), tels que bandes ou cartes perforées, disquettes, ou bandes magnétiques. Des programmes de pilotage de cette machine-outil à commande numérique (16) sont enregistrés dans une base de données à laquelle un serveur (26) a accès. Une console programmable (10) est alors associée à la machine-outil à commande numérique (16) et remplace son lecteur de support de données (24). Le transfert de fichiers de programmes de pilotage du serveur (26) vers la console programmable (10) se fait à travers un réseau (28) interconnectant la console programmable (10) et le serveur (26). La console programmable (10) est en outre équipée d'une mémoire (42) apte à stocker au moins un fichier de programme de pilotage. Un module de simulation programmable (44) de la console programmable (10) permet de simuler le lecteur de support de données(24) et de transférer ainsi le programme de pilotage de la machine-outil à commande numérique (16) stocké dans la mémoire (42) au directeur de commande numérique (22) de la machine-outil à commande numérique (16).

## Description

La présente invention concerne un système de gestion informatisé pour un parc de machines-outils à commande numérique.

Les machines-outils à commande numérique de la nouvelle génération possèdent en principe des fonctions de communication évoluées, permettant leur intégration dans un système de gestion informatisé de la fabrication. Or, dans presque tous les ateliers, les parc de machines existants comprennent généralement des machines-outils à commande numérique de générations différentes.

Les machines-outils à commande numérique de première génération sont généralement appelées machines NC (numerical control). Elles sont équipées d'un directeur de commande numérique (Numerical control director ou NCD), d'un pupitre de commande pour la communication directe de l'opérateur avec le NCD, d'un lecteur qui permet de lire des programmes de pilotage enregistrés sur des supports de données (tels que bandes ou cartes perforées, disquettes, ou bandes magnétiques) et de les transférer pour exécution au NCD. Le chargement d'un programme de pilotage spécifique dans le directeur de commande de la machine NC, nécessite l'insertion, dans le lecteur de cette machine, du support de données sur lequel il est enregistré. L'archivage de ces supports de données est généralement centralisé, le plus souvent au service des méthodes. Si on a un parc important de machines NC à gérer, on est par conséquent obligé de gérer et d'archiver un nombre important de supports de données différents contenant les programmes de pilotage pour les machines NC. Il est évident que la gestion et l'archivage bien organisés d'un si grand nombre de supports de données sont très coûteux. Une mauvaise organisation peut par contre causer des pertes importantes. Ainsi, il peut, par exemple, devenir impossible d'usiner une pièce de rechange plus ancienne, si on ne retrouve pas le support de données contenant le programme de pilotage pour la fabrication de cette pièce. L'acheminement des supports de données des archives vers les machines-outils doit lui aussi être bien organisé pour éviter des pertes de temps. Il faut encore noter que les supports de données se détériorent avec le temps et doivent de ce fait être renouvelés de temps en temps. Enfin, un incendie peut détruire les archives des supports de données, ce qui risque de priver l'entreprise d'une partie importante de son savoir-faire.

Les machines-outils à commande numérique de la deuxième génération sont généralement appelées machines CNC (computerized numerical control). Le NCD de ces machines CNC est habituellement équipé d'une interface RS232, de façon à pouvoir communiquer avec un PC situé à proximité. Les programmes de pilotage de la machine sont alors stockés sur le PC. Cependant, le PC n'est pas idéal en atelier de fabrication. Il est volumineux, sensible à l'environnement industriel. Les opérateurs doivent en connaître le fonctionnement, or les possibilités offertes sont trop nombreuses par rapport aux tâches à effectuer.

Les machines-outils à commande numérique de la génération la plus récente sont généralement appelées machines DNC (direct numerical control). Ces machines sont déjà équipées d'une carte réseau pour leur connexion à un réseau informatique. Elles sont dès lors capables de communiquer avec un serveur central sur lequel sont stockés leurs programmes de pilotage et sont installés des logiciels de gestion de la fabrication. Toutefois, un atelier est rarement équipé entièrement de machines DNC. De plus, les machines DNC de différents fabricants se distinguent par des interfaces de communication qui sont souvent très disparates, et ne sont pas toujours très performantes en ce qui concerne la collecte des données de production (data collection).

En définitive, même si la technologie actuelle offre de puissantes possibilités de gestion et de supervision informatisées de la fabrication, telles que les systèmes CAM (computer aided manufacturing) et CIM (computer integrated manufacturing), la plupart des entreprises ne peuvent pas les mettre en oeuvre pour gérer l'ensemble de leur parc machines outils, car ce dernier comprend le plus souvent des machines-outils à commande numérique de générations différentes.

L'objet de la présente invention est de proposer un système de gestion informatisé pour un parc de machines-outils à commande numérique comprenant au moins une machine de ladite première génération.

La présente invention concerne par conséquent un système de gestion informatisé pour un parc de machines-outils à commande numérique comprenant au moins une machine-outil à commande numérique de première génération. Cette machine-outil à commande numérique dispose d'un directeur de commande numérique et est équipée (au moins initialement) d'un lecteur de supports de données, tels que bandes ou cartes perforées, disquettes, ou bandes magnétiques, pour transférer des programmes de pilotage de la machine-outil à commande numérique stockés sur un tel support de données au directeur de commande numérique. Il sera apprécié que selon la présente invention, on stocke les programmes de pilotage de cette machine-outil sous forme de fichiers électroniques dans une base de données à laquelle un serveur informatique a accès. Une console programmable est alors associée à la machine-outil à commande numérique et remplace son lecteur de support de données initial. Le transfert de fichiers de programmes de pilotage du serveur vers la console programmable se fait à travers un réseau de transfert de données interconnectant la console programmable et le serveur. La console programmable est en outre équipée d'une mémoire apte à stocker au moins un fichier de programme de pilotage. Un module de simulation programmable de la console programmable permet de simuler le lecteur de support de données initial et de transférer ainsi le programme de pilotage de la machine-outil à commande numérique stocké dans la mémoire au directeur de commande numérique de la machine-outil à commande numérique.

Il sera apprécié que la présente invention permet de télécharger les programmes de pilotages dans le NCD d'une machine-outil à commande numérique, initialement prévue pour être exclusivement programmée à l'aide bandes ou cartes perforées, disquettes, ou bandes magnétiques. Ceci facilite la tâche de l'opérateur qui n'a plus besoin de se déplacer au bureau des méthodes pour aller chercher le support avec le programme de pilotage nécessaire. Les archives volumineuses de bandes ou cartes perforées, disquettes, ou bandes magnétiques sont remplacées par des archives virtuelles: une base de données avec des fichiers de programmes de pilotage enregistrés dans une mémoire de masse à laquelle le serveur a accès. Les programmes de pilotage peuvent par conséquent être entièrement gérés par des moyens informatiques.

La console programmable est préférentiellement munie d'une mémoire dont la taille permet de stocker plusieurs fichiers. Ainsi, la capacité de la mémoire de la machine-outil à commande numérique que la console programmable équipe se voit indirectement augmentée. De plus, des moyens de sélection sont prévus pour permettre à l'opérateur de choisir un des programmes en vue de son transfert au module de simulation.

Avantageusement, la console programmable comprend une mémoire morte reprogrammable dans laquelle est chargé un protocole de communication assurant la simulation du fonctionnement du lecteur de supports de données initial de la machine-outil. La console programmable est par conséquent spécifique à chaque machine, et contient de manière permanente les informations nécessaires pour la simulation du lecteur de support de données. De préférence, la console programmable est équipée d'un afficheur, d'un clavier et d'une horloge interne. La console programmable est alors un terminal permettant la mémorisation des temps écoulés pour chaque fabrication et la mémorisation des arrêts de production.

Lorsqu'un opérateur a modifié un programme de pilotage de la machine-outil à commande numérique pendant un cycle de fabrication, le module de simulation permet d'enregistrer le programme modifié dans la mémoire de la console programmable, d'où elle peut être transférée au serveur. Cette possibilité a l'avantage de permettre une mise à jour des programmes de pilotage directement à partir du poste de travail.

Avantageusement, chaque machine d'un atelier est équipée d'une console programmable standardisée, qui est programmée pour transférer un programme de pilotage stocké dans sa mémoire au directeur de commande numérique de la machine-outil selon un protocole spécifique.. On arrive ainsi à superviser et gérer d'une façon standardisée et uniformisée des machines machines-outils de générations et fabricants différents avec des moyens informatiques modernes.

La console programmable est préférentiellement munie d'entrées de data collection. Des questions sur la fabrication sont posées directement à l'opérateur de la machine-outil à commande numérique, sur son poste de travail. Des erreurs de saisie sont évitées et un rapport de fabrication peut être directement créé à partir du serveur dès que l'opérateur quitte son poste de travail.

De préférence, la console programmable est munie de connexions pour, et éventuellement de, périphériques qui facilitent la tâche de l'opérateur. Ceux-ci sont du type :
- lecteur de cartes magnétiques pour l'identification rapide de l'opérateur,
- clavier complet,
- lecteur de codes-barres, pour la saisie de codes de fabrication,

Selon un autre mode de réalisation préféré, la console programmable est est équipée de connexions pour, et éventuellement de, cartes d'extension. Celles-ci sont du type :
- carte parallèle,
- carte boucle de courant, pour la détection d'événements de sécurité,
- carte d'interface pour opto-coupleur pour la lecture de bandes perforées,
- cartes entrées sorties digitales et analogiques pour la détection automatique d'événements de production.

D'autres particularités et caractéristiques de l'invention ressortiront de la description détaillée de plusieurs modes de réalisation avantageux présentés ci-dessous, à titre d'illustration, en se référant aux dessins annexés. Ceux-ci montrent:
- Fig.1:: un schéma de connexion d'un système de gestion informatisé de machines-outils à commande numérique ;
- Fig.2:: un diagramme modulaire de la console programmable utilisée dans la réalisation préférée de la figure 1 ;
- Fig.3:: un diagramme synoptique des étapes d'un cycle de fabrication dans un système de gestion informatisé de machines-outils à commande numérique comprenant une console programmable et un serveur ;
- Fig.4:: une vue de la face avant de la console programmable, dans un mode de réalisation préféré ;
- Fig.5:: un diagramme d'un système de gestion intégrée des fabrications basé sur un système de gestion informatique de machines-outils à commande numérique ;
- Fig.6:: un schéma de câblage d'un atelier équipé d'un système de gestion intégrée des fabrications, comprenant un réseau de consoles et un réseau d'imprimantes.

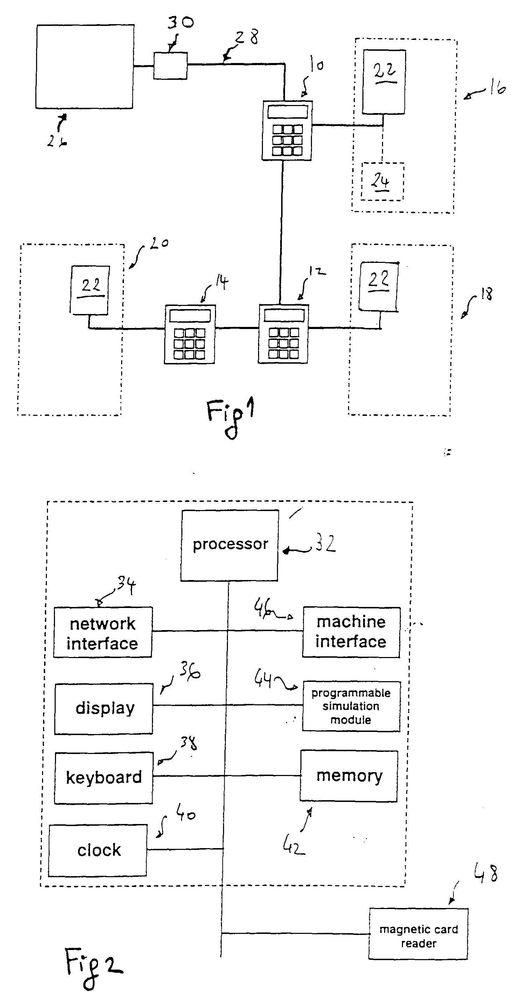

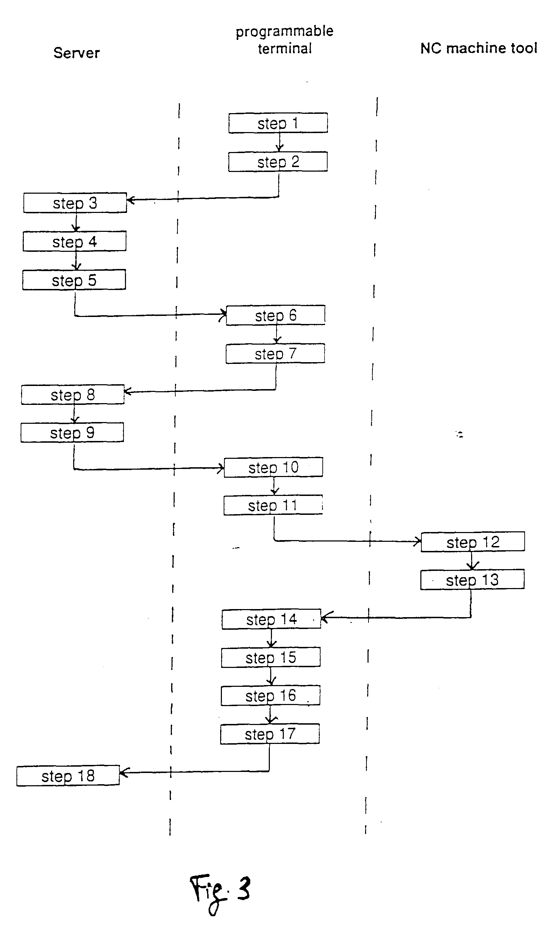

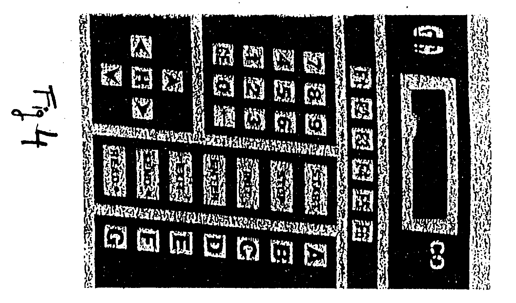

La Figure 1 présente un exemple de connexion d'un système de gestion informatique pour un parc de machines-outils à commande numérique selon l'invention. Ce parc de machines comprend à titre d'exemple trois machines-outils (MCN) 16, 18, 20, équipée chacune d'un directeur de commande numérique (NCD) 22.

Il sera noté que la MCN 16 est une machine de première génération, c'est-à-dire du type NC qui n'est pas prévue pour être intégré dans un système de gestion informatisé. Son NCD 22 est conçu pour être programmé soit manuellement à l'aide d'un pupitre de commande, soit à l'aide de bandes perforées introduites dans un lecteur de bandes perforées 24. Selon l'invention, on lui a associé une console programmable 10. La console programmable 10 est connectée au NCD 22 et simule le lecteur de bandes perforées 24. Elle remplace le lecteur de bandes perforées 24 ou est connectée en parallèle sur celui-ci. Avant de décrire plus en détail les caractéristiques et le fonctionnement de la console programmable 10 et son utilisation, il est commode de décrire les différents éléments du système.

La référence 26 désigne un serveur informatique. En tête d'un réseau 28, qui interconnecte le serveur 26 à trois consoles programmables 10, 12, 14, se trouve un amplificateur de réseau 30. Il convertit un signal RS232, échangé avec le serveur 26, en un signal RS485, et le distribue ensuite dans l'atelier aux différentes consoles programmables 10, 12 et 14. Le signal RS485 permet une communication plus fiable sur une grande distance. La longueur totale du câble de réseau 28 d'un amplificateur de réseau 30 peut faire jusqu'à 1000 m. Toutefois, il est possible de mettre des amplificateurs de réseau 30 en série et/ou en parallèle, pour augmenter la distance couverte et/ou le nombre de consoles programmables. En outre, l'amplificateur de réseau 30 fournit aux consoles programmables 10, 12, 14 une tension d'alimentation stabilisée de 24 V et protège l'informatique des perturbations électromagnétiques du milieu industriel. Les consoles programmables 10, 12, 14 sont branchées en ligne dans le réseau 28.

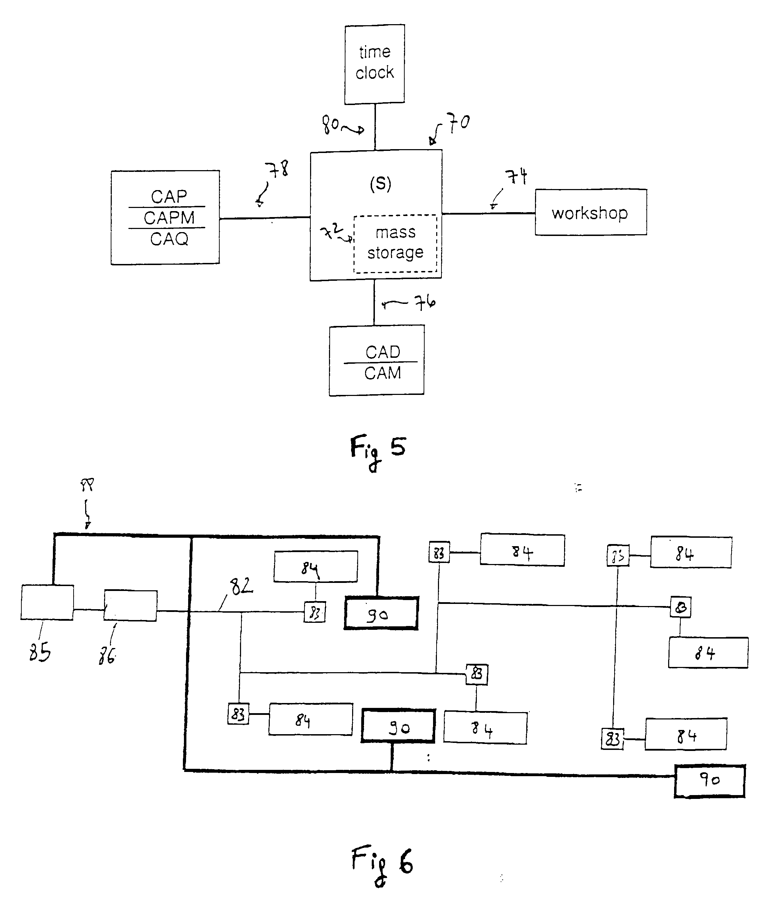

La Figure 2 présente les différents éléments de la console programmable 10. Autour d'un processeur 32 (processor) sont avantageusement interconnectés :
- une interface réseau 34 (network interface) assurant l'échange de données de la console programmable 10 vers le serveur 26, à travers le réseau 28 ;
- un afficheur 36 (display) à l'attention de l'opérateur machine ;
- un clavier 38 (keyboard) de saisie ;
- une hologe interne 40 (dock) ;
- une mémoire 42 (memory) permettant de stocker plusieurs fichiers dans la console programmable 10 ;
- un module de simulation programmable 44 (programmable simulation module) programmé de façon à ce que la console programmable 10 simule le lecteur de bandes perforées 24 équipant initialement la MCN 16 ;
- une interface machine 46 (machine interface) assurant l'échange de données entre la console programmable 10 et la MCN 16.
- un lecteur de cartes magnétiques 48 (magnetic card reader) a été ajouté pour l'identification de l'opérateur.

Il reste à préciser qu'une console programmable est affectée à une machine-outil déterminée puisque le module de simulation est programmé en fonction de la MCN qu'elle équipe. Dans le cas du lecteur de bandes perforées 24, le support de données initial se présente généralement sous la forme d'une bande perforée d'un pouce de large comportant sept pistes de codage, une piste de parité, et une piste d'entraînement. La première opération consiste à traduire le codage de la bande perforée en un fichier qui sera enregistré, par exemple sous forme d'un fichier texte, sur une mémoire de masse du serveur 26. Ensuite, les signaux émis aux bornes du lecteur de bandes perforées 24 sont analysés avec un oscilloscope et comparés aux codes lus. Une fois le protocole de communication du lecteur de bandes perforées 24 déterminé, le module de simulation programmable 44 est programmé de façon à pouvoir émettre des signaux, selon le même protocole, à partir d'un fichier programme de pilotage stocké dans la mémoire 42.

Dans une réalisation préférée de la console programmable, en accord avec le diagramme modulaire de la Figure 2 , on utilise :
- un processeur 80C31 d'Intel pour la commande du circuit électrique de la console programmable ;
- une mémoire 256 ko ou 512 ko pour le stockage des fichiers ;
- un afficheur rétro-éclairé de 2 lignes de 16 caractères pour le dialogue avec l'opérateur ;
- un clavier numérique, étanche, avec 13 touches de fonctions pour un accès rapide aux fonctions et la saisie ;
- une EPROM, mémoire morte reprogrammable qui sera programmée pour une utilisation avec une machine-outil à commande numérique déterminée ;
- une interface réseau RS485 pour l'échange de données à longue distance ;
- une interface machine RS232 pour l'échange de données à courte distance.

Afin de comprendre comment une telle console programmable 10 est utilisée dans un système de gestion informatique pour un parc de machines outils à commande numérique, la Figure 3 présente un diagramme synoptique des différentes étapes d'un cycle de fabrication. L'étape 1 - step 1, consiste simplement en l'identification de l'opérateur, elle se fait au moyen du lecteur de cartes magnétiques 48. Etape 2 - step 2, la console programmable 10 envoie au serveur 26 des informations sur l'identité de l'opérateur et de la MCN 16 à laquelle elle est affectée. Le serveur 26 vérifie l'autorisation de l'utilisateur, puis établit une liste de titres et descriptions de programmes de pilotage pour la MCN 16, ce sont les étapes 3 -step3, resp. 4 - step 4. Etape 5 - step 5, le serveur 26 transmet les données préparées à la console programmable 10. Sur la console programmable 10, l'opérateur peut faire défiler la liste téléchargée dans la mémoire 42 et sélectionne un ou plusieurs programmes de pilotages, c'est l'étape 6 - step 6. La console programmable 10 émet la sélection vers le serveur 26, étape 7 - step 7. Le serveur 26 met à disposition les fichiers contenant les programmes de pilotage demandés, et les envoie vers la console programmable 10 dès que le réseau 28 le permet, étapes 8 - step 8 et 9 - step 9. Les fichiers envoyés sont stockés dans la mémoire 42, étape 10 - step 10, et la console programmable 10 pose une série de questions en vue de la fabrication à effectuer, étape 11 - step 11. L'opérateur passe ensuite sur le pupitre de la MCN 16 et initie un cycle de fabrication, étape 12 - step 12. Avec l'étape 13 - step 13, la MCN 16 démarre la fabrication et le NCD 22 va chercher le programme sur son lecteur de bandes perforées 24. La console programmable 10 simule alors le lecteur jusqu'à la fin de la fabrication, pour les besoins du NCD 22, étape 14 - step 14. Dans l'étape 15 - step 15, l'opérateur indique la fin de la fabrication sur la console programmable 10. Cette dernière 10 lui pose quelques questions sur le déroulement de la fabrication (étape 16 - step 16) puis transmet les réponses au serveur 26 (étape 17 - step 17). Le dernier événement, étape 18 - step 18, est la création d'un rapport de fabrication par le serveur 26. La console programmable 10 permet ainsi également l'acquisition de données de fabrication (data-collection).

La Figure 4 propose une vue du panneau avant de la console programmable. Dans cette réalisation préférée elle est conforme aux normes IP65, peu encombrante, fonctionne en basse tension, autonome et résistante aux perturbations électromagnétiques.

Une console programmable peut avantageusement être équipée de périphériques et de cartes d'extension optionnels pour faciliter la tâche de l'opérateur, éviter des erreurs de saisie et diminuer les pertes de temps. Les périphériques sont du type : clavier externe complet, lecteur de codes-barres. Les différentes cartes d'extension peuvent être : carte parallèle, carte boucle de courant, carte d'interface pour opto-coupleur, cartes entrées/sorties digitales et analogiques.

Au cours de la fabrication sur la MCN 16, l'opérateur peut être amené à effectuer des modifications du programme de pilotage. Initialement le NCD 22 procurait la possibilité de diriger le programme modifié vers le lecteur de bandes perforées 24, qui était équipé d'un enregistreur permettant d'enregistrer une bande perforée avec le programme modifié. Le module de simulation programmable 44 de la console programmable 10 capte maintenant les signaux du NCD destinés à l'enregistreur de bandes perforées, les convertit pour former un fichier selon un protocole préprogrammé, et stocke enfin le fichier dans la mémoire 42. Le fichier modifié peut ensuite être envoyé vers le serveur 26 ensemble avec des identificateurs, tels que par exemple: le nom du fichier initial, la date de sa modification, le nom de l'opérateur qui l'a modifié, le numéro du plan etc. C'est une possibilité de mise à jour commode, rapide et sure des programmes de pilotage de machines NC.

Dans la Figure 1, les MCN 18 et 20 peuvent être du type CNC ou DNC. Les consoles programmables 12, 14 qui les équipent sont alors connectées à leur interface RS232. Cette utilisation permet l'uniformisation des moyens de surveillance et de data collection. Le module de simulation programmable de chaque console programmable du réseau 28 veille à ce que les programmes de pilotages soient téléchargés dans leur MCN respective.

Le système de gestion du parc de machines-outils à commande numérique de la Figure 1 peut être intégré en un système de gestion intégrée des fabrications ou CIM (computer integrated manufacturing). L'ordinateur serveur devient un centralisateur de requêtes et organisateur. Tous les services en relation avec la production y sont connectés. Le système informatique comprend : CAD (computer aided design), CAM (computer aided manufacturing), CAQ (computer aided quality assurence), CAP (computer aided planning), CAPM (computer aided production management). La figure 5 illustre le principe de la CIM construite autour d'un système de gestion de parc de machines-outils à commande numérique tel que décrit précédemment. On y distingue un serveur (S) 70 muni d'une mémoire de masse 72 pour le stockage de données de tous les domaines. Le serveur possède 4 réseaux fondamentaux, représentant les 4 domaines principaux concernés par un système CIM, à savoir :
- un réseau 74 vers l'atelier : les MCN sont équipées de consoles programmables ;
- un réseau 76 reliant évidemment la CAM, auquel on a également connecté la CAD qui est essentielle pour la conception de la fabrication ;
- un réseau 78 vers des domaines qui sont la raison d'être de la CIM, c'est-à-dire la possibilité pour la CAP, CAPM et CAQ d'accéder aux données de fabrication ; et
- un réseau 80 vers les pointeuse, pour des calculs de temps de travail etc.

Enfin, sur la Figure 6, deux réseaux ont été câblés dans l'atelier. Le premier réseau 82 est celui des consoles programmables 83 équipant des machines-outils à commande numérique 84. A la sortie d'un serveur 85 on a connecté un amplificateur de réseau 86. Ce dernier 86 est en tête du réseau 82 de consoles programmables 83 connectées en ligne dans l'atelier. Le deuxième réseau 88 relie des d'imprimantes 90 disposées judicieusement dans l'atelier. Dans une réalisation avantageuse du système de gestion du parc de machines-outils, l'opérateur peut demander au serveur 85, par l'intermédiaire d'une console programmable 83, des instructions ou documents concernant le travail qu'il doit effectuer sur la machine-outil à commande numérique 84 concernée. Les imprimantes 90 permettent d'imprimer ces différents documents (plans et consignes).

En définitive, dans une réalisation préférée du système de gestion informatisé pour un parc de MCN, dans laquelle le serveur est programmé pour la CIM et la console programmable munie de périphériques adéquats, la console programmable permet la surveillance et la commande de machines-outils de toutes générations, et sert de terminal d'appel de programmes, de sauvegarde de programmes, de requête d'impression de documents, de contrôle de tolérances de production (contrôle qualité), de lecture de codes-barres. La console programmable permet également l'augmentation indirecte de la mémoire interne de la MCN qu'elle équipe, la reconnaissance de l'utilisateur, la détection automatique d'événements de sécurité et de fabrication.

## Revendications

1. Système de gestion pour un parc de machines-outils à commande numérique comprenant au moins une machine-outil à commande numérique (16) équipée d'un directeur de commande numérique (22) et d'un lecteur de supports de données initial (24), tels que bandes ou cartes perforées, disquettes, ou bandes magnétiques, ledit lecteur de supports de données (24) étant apte à transférer des programmes de pilotage de ladite machine-outil à commande numérique (16) stockés sur ledit support de données audit directeur de commande numérique (22),
**caractérisé par**
un serveur (26) informatique ayant accès à une base de données contenant des fichiers de programmes de pilotage de ladite machine-outil à commande numérique (16) ;
une console programmable (10) associée à ladite machine-outil à commande numérique (16) et remplaçant ledit lecteur de supports de données (24) initial ;
un réseau (28) de transfert de données interconnectant ladite console programmable (10) et ledit serveur (26) ;
ladite console programmable (10) étant équipée au moins:
d'une mémoire (42) apte à stocker au moins un fichier programme de pilotage de ladite machine-outil à commande numérique (16) ; et
d'un module de simulation programmable (44) programmé de façon à simuler ledit lecteur de supports de données (24) initial de ladite machine-outil à commande numérique (16) pour transférer un programme de pilotage stocké dans ladite mémoire (42) audit directeur de commande numérique (22).

2. Système selon la revendication 1, caractérisé en ce que
la taille de ladite mémoire (42) est suffisante pour stocker plusieurs fichiers de programmes de pilotage; et
en ce que ladite console programmable (10) comprend des moyens pour sélectionner un desdits programmes de pilotages pour son transfert audit module de simulation programmable (44).

3. Système selon la revendication 1 ou 2, caractérisé en ce ladite console programmable (10) comprend une mémoire morte reprogrammable dans laquelle est chargé un protocole de communication assurant la simulation du fonctionnement dudit lecteur de support de données (24) initial.

4. Système selon l'une quelconque des revendications 1 à 3, caractérisé en ce que ladite console programmable (10) comprend également un afficheur (36), un clavier (38) et une horloge interne (40).

5. Système selon l'une quelconque des revendications 1 à 4, caractérisé par un amplificateur de réseau (30) connecté à la sortie dudit serveur (26).

6. Système selon la revendication 5, caractérisé en ce que le réseau comprend plusieurs amplificateurs de réseau en série et/ou en parallèle.

7. Système selon l'une quelconque des revendications 1 à 6, caractérisé en ce que le module de simulation programmable (44) est conçu de façon à pouvoir enregistrer un programme de pilotage modifié manuellement sur ladite machine-outil à commande numérique (16) dans ladite mémoire (42).

8. Système selon l'une quelconque des revendications 1 à 7, caractérisé en ce que ledit parc de machines-outils à commande numérique comprend également des machines-outils à commande numérique CNC ou DNC, et en ce que chaque machine-outil du parc est équipée d'une console programmable programmée pour transférer un programme de pilotage stocké dans sa mémoire audit directeur de commande numérique de la machine-outil selon un protocole spécifique.

9. Système selon l'une quelconque des revendications 1 à 8, caractérisé en ce que la console programmable comprend des entrées de data collection.

10. Système selon l'une quelconque des revendications 1 à 9, caractérisé en ce que ladite console programmable est équipée d'au moins une connexion pour un périphérique, et éventuellement dudit périphérique.

11. Système selon la revendiction 10, caractérisé en ce que ledit périphérique est choisi parmi les périphériques suivants: lecteur de cartes magnétiques, clavier séparé, lecteur de codes-barres.

12. Système selon l'une quelconque des revendications 1 à 11, caractérisé en ce que ladite console programmable est équipée d'au moins une connexion pour une carte d'extension, et éventuellement de ladite carte d'extension.

13. Système selon la revendication 12, caractérisé en ce que ladite carte est choisie parmi les cartes d'extension suivantes: carte parallèle, carte boucle de courant, carte d'interface pour opto-coupleur, cartes entrées sorties digitales et analogiques.

14. Procédé pour intégrer une machine-outil à commande numérique dans un système de gestion informatisé pour un parc de machines-outils à commande numérique, ladite machine-outil à commande numérique (16) étant équipée d'un directeur de commande numérique (22) et, au moins initialement, d'un lecteur de supports de données (24), tels que bandes ou cartes perforées, disquettes, ou bandes magnétiques, ledit lecteur de supports de données (24) étant apte à transférer des programmes de pilotage de ladite machine-outil (16) stockés sur ledit support de données audit directeur de commande numérique (22) qui les exécutes,
**caractérisé en ce que**:
l'on crée sur un serveur (26) informatique une base de données contenant des fichiers de programmes de pilotage de ladite machine-outil à commande numérique (16);
l'on connecte une console programmable (10) équipée au moins d'une mémoire (42) et d'un module de simulation programmable (44) à ladite machine-outil à commande numérique (16) ;
et l'on connecte ladite console programmable (10) audit serveur (26) à travers un réseau (28) de façon à pouvoir charger au moins un fichiers de programme de pilotage du serveur dans ladite mémoire (42) ; et
l'on programme ledit module de simulation programmable (44) de façon à pouvoir transférer un programme de pilotage stocké dans ladite mémoire (42) audit directeur de commande numérique (22) en simulant ledit lecteur de supports de données (24) initial.
